(19) 

**Europäisches Patentamt**
**European Patent Office**
**Office européen des brevets**

(11) **EP 4 610 635 A1**

(12) **EUROPEAN PATENT APPLICATION**
published in accordance with Art. 153(4) EPC

(43) Date of publication:
**03.09.2025 Bulletin 2025/36**

(21) Application number: **23882126.8**

(22) Date of filing: **13.03.2023**

(51) International Patent Classification (IPC):
***G01N 21/892*** (2006.01)

(52) Cooperative Patent Classification (CPC):
**G01N 21/892**

(86) International application number:
**PCT/JP2023/009556**

(87) International publication number:
**WO 2024/089908 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 JP 2022172916**

(71) Applicant: **Futec Inc.**
**Kagawa 761-0301 (JP)**

(72) Inventor: **HISAMORI, Yasumasa**
**Takamatsu-shi Kagawa 761-0301 (JP)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(54) **EXTERNAL APPEARANCE INSPECTION DEVICE FOR ELONGATE OBJECTS**

(57) An appearance inspection device for an elongated object includes a high-performance imager at reduced cost without lowering the imaging performance. An appearance inspection device (10) for an elongated object includes an imaging unit (12) that captures an image of a periphery of an elongated object (11). The imaging unit (12) includes an imager (20) and reflector sets each including multiple reflectors combined to define an optical path extending from the imager (20) to the elongated object (11). Each reflector included in each reflector set is located within a predetermined range. The optical path extending in each reflector set from the imager (20) to the elongated object (11) has a length within a predetermined range. This structure allows the appearance of the elongated object to be fully inspected around 360 degrees about the axis with a single costly imager. The inspection device is thus less costly.

FIG. 1

**Description**

FIELD

The present invention relates to an appearance inspection device for an elongated object. More specifically, the present invention relates to an appearance inspection device that can inspect the appearance of an elongated object along the full periphery in a plane perpendicular to the axis of the elongated object.

BACKGROUND

An example of an appearance inspection device for an elongated object such as an electric wire or a steel wire is an appearance inspection device for an elongated object described in Patent Literature 1. The appearance inspection device described in Patent Literature 1 includes a carrier that feeds an elongated object in the axial direction of the object, and multiple imagers. The imagers capture images of the appearance of the elongated object along the full periphery in a plane perpendicular to the axis of the elongated object for appearance inspection.

CITATION LIST

PATENT LITERATURE

Patent Literature 1: Japanese Unexamined Patent Application Publication No. 2008-309708

BRIEF SUMMARY

TECHNICAL PROBLEM

During appearance inspection of an elongated object, the elongated object is fed at a speed of, for example, greater than or equal to 100 meters per minute. Capturing highly accurate images of the appearance of the elongated object in this state involves the use of a high-performance imager with high resolution and with a shorter sampling period and a high-performance control device, which are costly. Thus, an inspection device including multiple imagers is costly.
Under such circumstances, one or more aspects of the present invention are directed to an appearance inspection device for an elongated object including a high-performance imager at reduced cost without lowering the imaging performance.

SOLUTION TO PROBLEM

An appearance inspection device for an elongated object according to a first aspect of the present invention is an appearance inspection device for an elongated object fed in an axial direction. The appearance inspection device includes an imaging unit that captures an image of a periphery of the elongated object. The imaging unit includes an imager and a plurality of reflector sets. Each of the plurality of reflector sets includes a plurality of reflectors combined to define an optical path extending from the imager to the elongated object to allow the imager to capture an image of an appearance of the elongated object. Each of the plurality of reflectors included in each of the plurality of reflector sets includes a reflecting portion in a plane perpendicular to an axis of the elongated object and within an angle of view of the imager in the axial direction. The optical path extending in each of the plurality of reflector sets from the imager to the elongated object has a length within a predetermined range.
An appearance inspection device for an elongated object according to a second aspect of the present invention is the appearance inspection device according to the first aspect in which the length of the optical path extending in each of the plurality of reflector sets from the imager to the elongated object is within a range predetermined based on a depth of field of the imager.
An appearance inspection device for an elongated object according to a third aspect of the present invention is the appearance inspection device according to the first aspect or the second aspect in which at least one of the plurality of reflector sets includes an inspection-target reflector closest to the elongated object on the optical path, an imager reflector closest to the imager on the optical path, and an optical-path length adjustment reflector that adjusts the length of the optical path.
An appearance inspection device for an elongated object according to a fourth aspect of the present invention is the appearance inspection device according to any one of the first to third aspects further including a controller that receives an image from the imaging unit. The controller performs appearance inspection of the elongated object using only images captured with the plurality of reflector sets.

An appearance inspection device for an elongated object according to a fifth aspect of the present invention is the appearance inspection device according to any one of the first to fourth aspects in which each of the plurality of reflectors reflects light on a surface of the reflector.

ADVANTAGEOUS EFFECTS

The appearance inspection device for an elongated object according to the first aspect includes the plurality of reflector sets for capturing an image of the appearance of an elongated object, and thus can fully inspect the appearance of the elongated object around 360 degrees about its axis with a single imager. The inspection device is thus less costly. The reflecting portion of each reflector is located in a plane perpendicular to the axis of the elongated object and within the angle of view of the imager in the axial direction. This structure can avoid a size increase of the appearance inspection device for an elongated object in the axial direction, and thus can reduce the size of the inspection device.

In the appearance inspection device for an elongated object according to the third aspect, at least one of the reflector sets includes the optical-path length adjustment reflector that adjusts the optical path length. Thus, the optical path length for each reflector set can be set as appropriate to fall within the depth of field.

In the appearance inspection device for an elongated object according to the fourth aspect, the controller performs appearance inspection using only the images captured with the reflector sets. This structure can reduce the differences in the optical path lengths compared with appearance inspection in which an elongated object is viewed directly, thus improving the accuracy of appearance inspection.

In the appearance inspection device for an elongated object according to the fifth aspect, each reflector reflects light on its surface, and thus facilitates the adjustment of the optical path lengths.

BRIEF DESCRIPTION OF DRAWINGS

FIG. 1 is a front view of an imaging unit included in an appearance inspection device for an elongated object according to a first embodiment of the present invention.

FIG. 2 is a schematic diagram of the appearance inspection device for an elongated object according to the first embodiment of the present invention.

FIG. 3A is a diagram of a reflector set included in the imaging unit in the appearance inspection device for an elongated object in FIG. 1, for capturing an image of a portion of an elongated object closer to the imager, and FIG. 3B is a diagram of a reflector set included in the imaging unit in the appearance inspection device for an elongated object in FIG. 1, for capturing an image of a portion of an elongated object farther from the imager.

FIG. 4A is a diagram of a master image obtainable with the imager in the appearance inspection device for an elongated object in FIG. 1, and FIG. 4B is a diagram of an image sample obtainable with the imager in the appearance inspection device for an elongated object in FIG. 1.

FIG. 5 is a front view of an imaging unit included in an appearance inspection device for an elongated object according to a second embodiment of the present invention.

FIG. 6A is a diagram of a reflector set included in the imaging unit in the appearance inspection device for an elongated object in FIG. 5, for capturing an image of a portion of the elongated object closer to the imager, and FIG. 6B is a diagram of a reflector set included in the imaging unit in the appearance inspection device for an elongated object in FIG. 5, for capturing an image of a portion the elongated object farther from the imager.

DETAILED DESCRIPTION

Embodiments of the present invention will now be described with reference to the drawings. The embodiments described below are mere examples of an appearance inspection device for an elongated object for embodying the technical idea of the present invention, and an appearance inspection device for an elongated object according to the present invention is not limited to the embodiments described below. The dimensions or positional relationships of the components in the drawings may be exaggerated for clarity.

First Embodiment

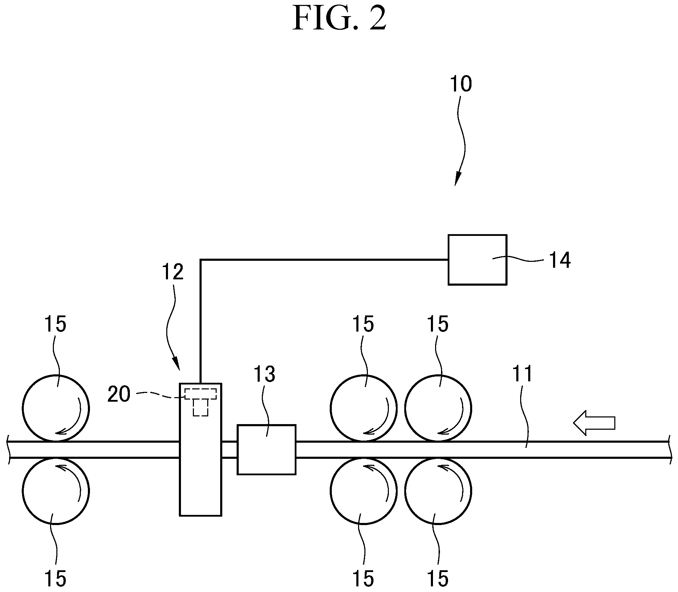

FIG. 2 is a schematic diagram of an appearance inspection device 10 for an elongated object according to a first embodiment of the present invention. As shown in FIG. 2, the appearance inspection device 10 for an elongated object according to the present embodiment includes a feeder that feeds an elongated object 11 as an inspection target in the axial direction of the elongated object, and an imaging unit 12 that captures an image of the periphery of the elongated object 11.

An elongated object as an inspection target is an object, such as a steel wire or an electric wire, that is longer in the axial direction than in a plane perpendicular to the axis. More specifically, an elongated object is a pillar-like object that is longer in the axial direction than in a direction perpendicular to the axis. The cross section perpendicular to the axis has any shape, such as a circle, an ellipse, or a polygon including a quadrangle. The elongated object may be a solid object or may be a hollow object such as a steel pipe, a copper pipe, or a resin tube. The elongated object may be easily bendable, similarly to an electric wire.

The feeder in the appearance inspection device 10 for an elongated object according to the present embodiment includes multiple rollers 15. The rollers 15 are in pairs. In the present embodiment, the appearance inspection device 10 for an elongated object includes three pairs of rollers 15. Each pair holds the elongated object 11 between the rollers 15. While rotating in the respective directions indicated by the black arrows in FIG. 2, the rollers 15 feed the elongated object 11 in the direction indicated by the outlined arrow that is the axial direction of the elongated object 11, or more specifically, from right to left in the page of FIG. 2. Although the appearance inspection device 10 for an elongated object according to the present embodiment includes the feeder, the structure is not limited to this example. For example, any device at the front or at the rear of the appearance inspection device 10 for an elongated object may include a feeder, and the appearance inspection device 10 for an elongated object may include no feeder.

The appearance inspection device 10 for an elongated object according to the present embodiment includes the imaging unit 12. The imaging unit 12 includes an imager 20, multiple reflector sets, and other components (described later).

The appearance inspection device 10 for an elongated object according to the present embodiment includes a light source 13. The light source 13 emits light toward the peripheral surface of the elongated object 11. In the present embodiment, the light source 13 is, but not particularly limited to, a light-emitting diode (LED). For example, the light source 13 may be a fluorescent lamp or a halogen light source.

The appearance inspection device 10 for an elongated object according to the present embodiment includes a controller 14 electrically connected to the imager 20 included in the imaging unit 12. The controller 14 detects a flaw or a stain on the surface of the elongated object 11 using an image captured by the imager 20.

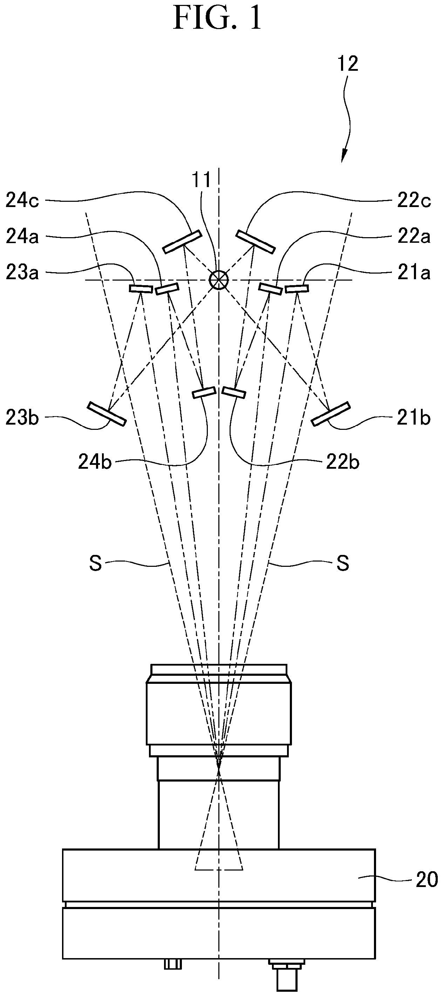

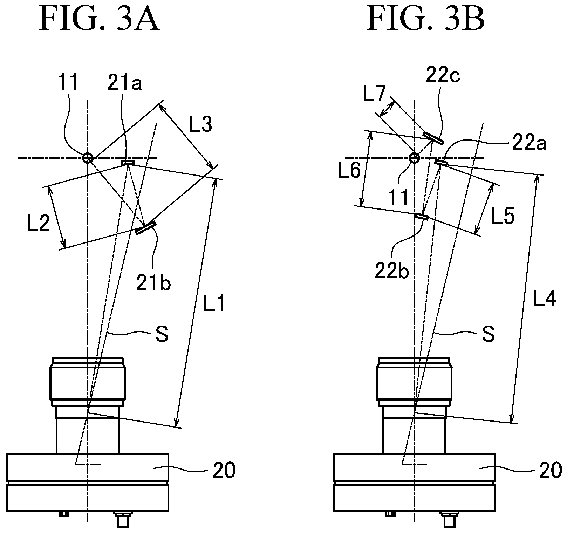

FIG. 1 is a front view of the imaging unit 12 included in the appearance inspection device 10 for an elongated object according to the first embodiment of the present invention. This front view of the imaging unit 12 is viewed from the right in the axial direction of the elongated object 11 in FIG. 2. FIG. 3A is a diagram of a reflector set included in the imaging unit 12 in the appearance inspection device 10 for an elongated object in FIG. 1, for capturing an image of a portion of the elongated object closer to the imager. FIG. 3B is a diagram of a reflector set included in the imaging unit 12 in the appearance inspection device 10 for an elongated object in FIG. 1, for capturing an image of a portion of the elongated object farther from the imager. For ease of explanation of the structure of the imaging unit 12, FIGs. 1, 3A, and 3B illustrate selected components alone.

The appearance inspection device 10 for an elongated object according to the present embodiment includes the imager 20 and the reflector sets. Each reflector set includes multiple reflectors combined to define an optical path extending from the imager 20 to the elongated object 11 to allow the imager 20 to capture images of the appearance of the elongated object 11. In the present embodiment in FIG. 1, four reflector sets are arranged in the imaging unit 12. The appearance inspection device 10 for an elongated object may include any number of reflector sets, or specifically, three, five, or more reflector sets. However, the appearance inspection device 10 for an elongated object is to include at least two reflector sets to measure the full periphery of the elongated object 11 divided into at least two sections.

For the elongated object 11 having a larger cross section, or for example, for the elongated object 11 having a circular cross section with a larger diameter, the imager 20 with the depth of field remaining the same uses more reflector sets. This is because the number of reflector sets determines the measurable angle range of the periphery of the elongated object. For example, for the number of reflector sets being two, the measurable angle range is 180 degrees. For the number of reflector sets being four, the measurable angle range is 90 degrees. For the measurable angle range of 180 degrees, the depth of field is to correspond to a radius. For the measurable angle range of 90 degrees, however, the depth of field is to correspond to a value of (radius - radius $\times \sqrt{2}/2$). In this manner, the appearance inspection device for an elongated object according to the present embodiment is to perform appearance inspection based on the depth of field of the imager 20 as appropriate for the shape of the inspection target. In the appearance inspection device for an elongated object according to the present embodiment, each reflector set may have an optical path length from the imager 20 to the elongated object within a range predetermined based on the depth of field of the imager.

The reflectors included in each reflector set are arranged to each have its reflecting portion located in a plane perpendicular to the axis of the elongated object and within the angle of view in the axial direction of the imager. More specifically, the imager 20 has a predetermined angle of view in the axial direction of the elongated object 11. Based on the angle of view in the axial direction that is the predetermined angle of view described above, the reflecting portion of each reflector is located in a plane perpendicular to the axis of the elongated object and within the angle of view in the axial direction of the imager in the present embodiment.

In the present embodiment, each reflector reflects light on its surface. For example, each reflector may be formed from, for example, glass having a surface with a vapor deposited aluminum coating. Each reflector reflects light on its surface, and thus the optical path length is easily adjustable. The structure of each reflector is not limited to this structure. Each reflector in a plane perpendicular to the axis of the elongated object 11 may be large enough to reflect a full image of the elongated object 11 without any part missing. In the present embodiment, each reflector has a flat reflecting surface, but may have a surface other than a flat reflecting surface. Each reflector may have a curved reflecting surface in a plane perpendicular to the axis of the elongated object 11 to enlarge or reduce the image of the elongated object 11.

In the present embodiment, four reflector sets are arranged. More specifically, in the present embodiment, the reflector sets are arranged to measure the respective ranges of 90 degrees of 360 degrees around the full periphery of the elongated object 11. In FIGs. 1, 3A, and 3B, the angle of view in the horizontal direction of the imager 20 in a plane perpendicular to the axis of the elongated object 11 is drawn with the dotted lines and denoted with S, and the optical path of each reflector set is drawn with the two-dot-dash line. The reflectors included in each reflector set can be classified as below based on the positional relationship on the optical path. The reflector closest to the elongated object 11 on the optical path is classified as an inspection-target reflector, the reflector closest to the imager 20 on the optical path is classified as an imager reflector, and a reflector other than the inspection-target reflector or the imager reflector is classified as an optical-path length adjustment reflector for adjusting the optical path length.

A first reflector set (also shown in FIG. 3A) includes a first-A reflector 21a and a first-B reflector 21b. The first reflector set is used to capture an image of a right portion of the elongated object closer to the imager in the page of FIG. 1. In the first reflector set, the first-A reflector 21a serves as the imager reflector, and the first-B reflector 21b serves as the inspection-target reflector.

A second reflector set (also shown in FIG. 3B) includes a second-A reflector 22a, a second-B reflector 22b, and a second-C reflector 22c. The second reflector set is used to capture an image of a right portion of the elongated object farther from the imager in the page of FIG. 1. In the second reflector set, the second-A reflector 22a serves as the imager reflector, the second-B reflector 22b serves as the optical-path length adjustment reflector, and the second-C reflector 22c serves as the inspection-target reflector.

A third reflector set includes a third-A reflector 23a and a third-B reflector 23b. The third reflector set is used to capture an image of a left portion of the elongated object closer to the imager in the page of FIG. 1. In the third reflector set, the third-A reflector 23a serves as the imager reflector, and the third-B reflector 23b serves as the inspection-target reflector.

A fourth reflector set includes a fourth-A reflector 24a, a fourth-B reflector 24b, and a fourth-C reflector 24c. The fourth reflector set is used to capture an image of a left portion of the elongated object farther from the imager in the page of FIG. 1. In the fourth reflector set, the fourth-A reflector 24a serves as the imager reflector, the fourth-B reflector 24b serves as the optical-path length adjustment reflector, and the fourth-C reflector 24c serves as the inspection-target reflector.

In the present embodiment, each reflector set features its optical path length. This will be described with reference to FIGs. 3A and 3B. In FIG. 1, the reflector sets in the present embodiment are symmetric with respect to a straight line connecting the center of the elongated object 11 and the focus of the imager 20. FIGs. 3A and 3B thus respectively show the first reflector set and the second reflector set.

As shown in FIG. 3A, a first optical path length LA in the first reflector set is expressed as Formula 1 below, where L1 is a distance between the focus of the imager 20 and the first-A reflector 21a, L2 is a distance between the first-A reflector 21a and the first-B reflector 21b, and L3 is a distance between the first-B reflector 21b and the surface of the elongated object 11. In the present embodiment, the first optical path length LA is within a predetermined range. For a predetermined reference of 200 mm, for example, the first optical path length LA is within 200 $\pm$ 5 mm. This predetermined range is determined based on multiple parameters including the depth of field of the imager 20.

$$LA = L1 + L2 + L3 \qquad (1)$$

As shown in FIG. 3B, a second optical path length LB in the second reflector set is expressed by Formula 2 below, where L4 is a distance between the focus of the imager 20 and the second-A reflector 22a, L5 is a distance between the second-A reflector 22a and the second-B reflector 22b, L6 is a distance between the second-B reflector 22b and the second-C reflector 22c, and L7 is a distance between the second-C reflector 22C and the surface of the elongated object 11. In the present embodiment, the second optical path length LB is within a predetermined range. This predetermined range is determined based on multiple parameters including the depth of field of the imager 20.

$$LB = L4 + L5 + L6 + L7 \qquad (2)$$

In each of the first to fourth reflector sets in the present embodiment, the optical path length is within the predetermined range. The optical path lengths in the reflector sets each within the predetermined range cause the distances of the optical paths from the imager 20 to the surface of the elongated object 11 to be substantially the same and all the reflector sets to have substantially the same focus. Thus, the appearance of the elongated object 11 can be fully inspected around 360 degrees about its axis with the single costly imager 20. The inspection device is thus less costly.

In the present embodiment, the optical-path length adjustment reflector in each of the second and fourth reflector sets for inspecting the appearance farther from the imager is located closer to a segment connecting the focus of the imager 20 and the elongated object 11 than an optical path connecting the focus of the imager 20 and the corresponding imager reflector. This arrangement can reduce the size of the imaging unit 12.

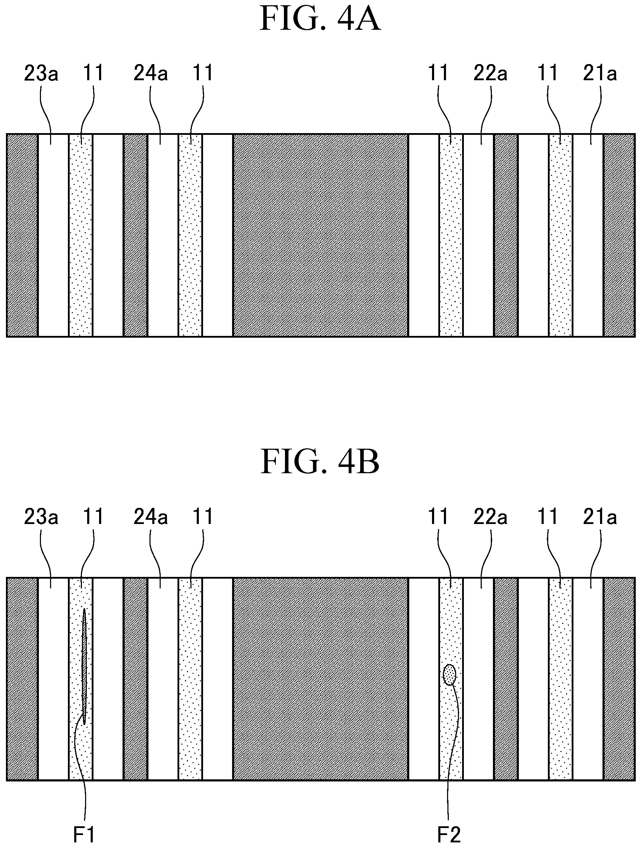

FIG. 4A is a diagram of a master image obtainable with the appearance inspection device 10 for an elongated object according to the present embodiment. FIG. 4B is a diagram of an image sample obtainable with the appearance inspection device 10 for an elongated object according to the present embodiment. FIG. 4A shows the appearance of the elongated object 11 reflected from the four imager reflectors at the respective angles. The densely dotted portions in the figure indicate portions out of focus of the imager 20. FIG. 4A shows, from the right, the first-A reflector 21a in the first reflector set, the second-A reflector 22a in the second reflector set, the fourth-A reflector 24a in the fourth reflector set, and the third-A reflector 23a in the third reflector set. The master image shows the appearance of the elongated object 11 reflected from the reflectors at the respective angles. FIG. 4B shows a flaw F1 and a stain F2 in the appearance of the elongated object 11 in one example.

As shown in FIGs. 4A and 4B, the imager 20 in the present embodiment clearly shows only the images captured with the four reflector sets. The controller 14 electrically connected to the imaging unit 12 thus performs the appearance inspection of the elongated object using only the images captured with these four reflector sets.

In the present embodiment, the optical path length of each reflector set is within the predetermined range. The appearance of the elongated object 11 reflected from each of the four imager reflectors is thus in focus, and can be inspected accurately.

At least one of the reflector sets, or more specifically, the second and fourth reflector sets in the present embodiment each include the optical-path length adjustment reflector for adjusting the optical path length. Thus, the optical path length of each reflector set can be set as appropriate to be within the depth of field.

The controller 14 performs appearance inspection using only the images captured with the reflector sets. Thus, compared with appearance inspection in which the elongated object 11 is viewed directly, the differences in the optical path lengths can be reduced, improving the accuracy of appearance inspection.

In the present embodiment, the controller 14 performs the appearance inspection of the elongated object 11 using only the images captured with the reflector sets, but the structure is not limited to this example.

Second Embodiment

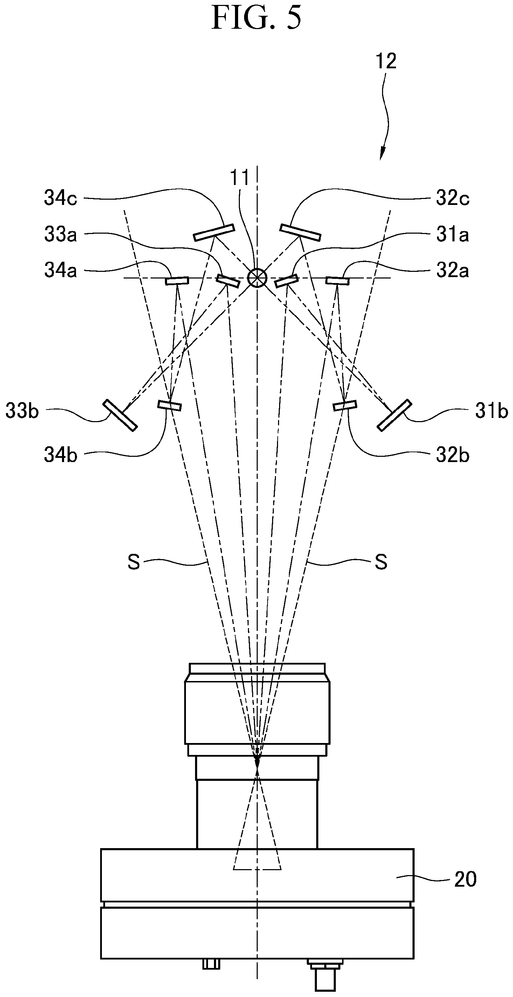

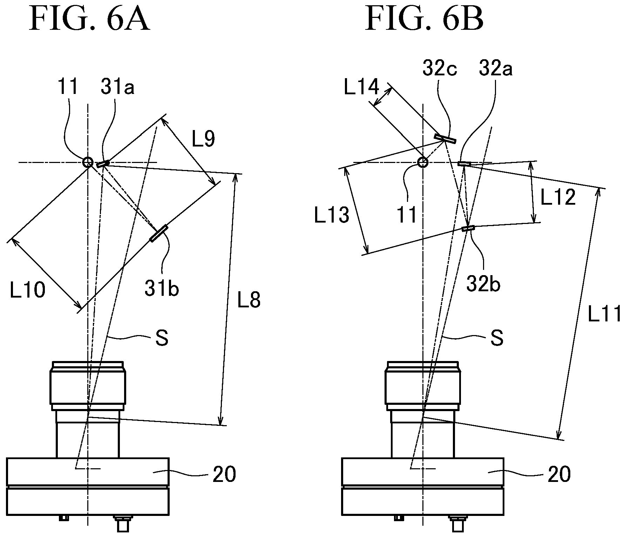

FIG. 5 is a front view of an imaging unit 12 included in an appearance inspection device for an elongated object according to a second embodiment of the present invention. FIG. 6A is a diagram of a reflector set included in the imaging unit 12 in the appearance inspection device for an elongated object, for capturing an image of a portion of the elongated object closer to the imager. FIG. 6B is a diagram of a reflector set included in the imaging unit 12 in the appearance inspection device for an elongated object, for capturing an image of a portion of the elongated object farther from the imager.

The second embodiment differs from the first embodiment in the positional relationship between the reflectors included in each reflector set. Other components are the same as in the first embodiment, and thus will not be described.

As in the first embodiment, four reflector sets are arranged in the present embodiment. More specifically, in the present embodiment, the reflector sets are arranged to measure the respective ranges of 90 degrees of 360 degrees around the full periphery of the elongated object 11. In FIGs. 5, 6A, and 6B, the angle of view in the horizontal direction of the imager 20 in a plane perpendicular to the axis of the elongated object 11 is drawn with the dotted lines and denoted with S, and the optical path of each reflector set is drawn with the two-dot-dash line. The reflectors included in each reflector set can be classified as below based on the positional relationship on the optical path. More specifically, the reflector closest to the elongated object 11 on the optical path is classified as an inspection-target reflector, the reflector closest to the imager 20 on the optical path is classified as an imager reflector, and a reflector other than the inspection-target reflector or the imager reflector is classified as an optical-path length adjustment reflector for adjusting the optical path length.

A fifth reflector set (also shown in FIG. 6A) includes a fifth-A reflector 31a and a fifth-B reflector 31b. The fifth reflector set is used to capture an image of a right portion of the elongated object closer to the imager in the page of FIG. 5. In the fifth reflector set, the fifth-A reflector 31a serves as the imager reflector, and the fifth-B reflector 31b serves as the inspection-target reflector.

A sixth reflector set (also shown in FIG. 6B) includes a sixth-A reflector 32a, a sixth-B reflector 32b, and a sixth-C reflector 32c. The sixth reflector set is used to capture an image of a right portion of the elongated object farther from the imager in the page of FIG. 5. In the sixth reflector set, the sixth-A reflector 32a serves as the imager reflector, the sixth-B reflector 32b serves as the optical-path length adjustment reflector, and the sixth-C reflector 32c serves as the inspection-target reflector.

A seventh reflector set includes a seventh-A reflector 33a and a seventh-B reflector 33b. The seventh reflector set captures an image of a left portion of the elongated object closer to the imager in the page of FIG. 5. In the seventh reflector set, the seventh-A reflector 33a serves as the imager reflector, and the seventh-B reflector 33b serves as the inspection-target reflector.

An eighth reflector set includes an eighth-A reflector 34a, an eighth-B reflector 34b, and an eighth-C reflector 34c. The eighth reflector set is used to capture an image of a left portion of the elongated object farther from the imager in the page of FIG. 5. In the eighth reflector set, the eighth-A reflector 34a serves as the imager reflector, the eighth-B reflector 34b serves as the optical-path length adjustment reflector, and the eighth-C reflector 34c serves as the inspection-target reflector.

In the present embodiment, each reflector set features its optical path length. This will be described with reference to FIGs. 6A and 6B. In FIG. 5, the reflector sets in the present embodiment are symmetric with respect to a straight line connecting the center of the elongated object 11 and the focus of the imager 20. FIG. 5 thus shows the fifth reflector set and the sixth reflector set.

As shown in FIG. 6A, a fifth optical path length LE in the fifth reflector set is expressed as Formula 3 below, where L8 is a distance between the focus of the imager 20 and the fifth-A reflector 31a, L9 is a distance between the fifth-A reflector 31a and the fifth-B reflector 31b, and L10 is a distance between the fifth-B reflector 31b and the surface of the elongated object 11. In the present embodiment, the fifth optical path length LE is within a predetermined range. This predetermined range is determined based on multiple parameters including the depth of field of the imager 20.

$$LE = L8 + L9 + L10 \qquad (3)$$

As shown in FIG. 6B, a sixth optical path length LF in the sixth reflector set is expressed by Formula 4 below, where L11 is a distance between the focus of the imager 20 and the sixth-A reflector 32a, L12 is a distance between the sixth-A reflector 32a and the sixth-B reflector 32b, L13 is a distance between the sixth-B reflector 32b and the sixth-C reflector 32c, and L14 is a distance between the sixth-C reflector 32C and the surface of the elongated object 11. In the present embodiment, the sixth optical path length LF is within a predetermined range. This predetermined range is determined based on multiple parameters including the depth of field of the imager 20.

$$LF = L11 + L12 + L13 + L14 \qquad (4)$$

In each of the fifth to eighth reflector sets in the present embodiment, the optical path length is within the predetermined range. The optical path lengths in the reflector sets each within the predetermined range cause the distances of the optical paths from the imager 20 to the surface of the elongated object 11 to be substantially the same and all the reflector sets to have substantially the same focus. Thus, appearance of the elongated object 11 can be fully inspected around 360 degrees about its axis with the single costly imager 20. The inspection device is thus less costly.

In the present embodiment, the optical-path length adjustment reflector in each of the sixth and eighth reflector sets for inspecting the appearance farther from the imager is located more distant from a segment connecting the focus of the imager 20 and the elongated object 11 than an optical path connecting the focus of the imager 20 and the imager reflector. This arrangement allows the imager 20 to directly capture an image of the appearance of the elongated object 11.

REFERENCE SIGNS LIST

| | |
|---|---|
| 10 | appearance inspection device for elongated object |
| 11 | elongated object |
| 12 | imaging unit |
| 14 | controller |
| 20 | imager |
| 21a | first-A reflector |
| 21b | first-B reflector |
| 22a | second-A reflector |
| 22b | second-B reflector |
| 22c | second-C reflector |
| LA | first optical path length |
| L1 | distance between focus of imager and first-A reflector |

L2    distance between first-A reflector and first-B reflector
L3    distance between first-B reflector and surface of elongated object
LB    second optical path length
L4    distance between focus of imager and second-A reflector
L5    distance between second-A reflector and second-B reflector
L6    distance between second-B reflector and second-C reflector
L7    distance between second-C reflector and surface of elongated object

**Claims**

1.  An appearance inspection device for an elongated object fed in an axial direction, the device comprising:

    an imaging unit configured to capture an image of a periphery of the elongated object, the imaging unit including

    an imager, and
    a plurality of reflector sets, each of the plurality of reflector sets including a plurality of reflectors combined to define an optical path extending from the imager to the elongated object to allow the imager to capture an image of an appearance of the elongated object,
    wherein each of the plurality of reflectors included in each of the plurality of reflector sets includes a reflecting portion in a plane perpendicular to an axis of the elongated object and within an angle of view of the imager in the axial direction, and

    the optical path extending in each of the plurality of reflector sets from the imager to the elongated object has a length within a predetermined range.

2.  The appearance inspection device according to claim 1, wherein
    the length of the optical path extending in each of the plurality of reflector sets from the imager to the elongated object is within a range predetermined based on a depth of field of the imager.

3.  The appearance inspection device according to claim 1 or claim 2, wherein
    at least one of the plurality of reflector sets includes

    an inspection-target reflector closest to the elongated object on the optical path,
    an imager reflector closest to the imager on the optical path, and
    an optical-path length adjustment reflector configured to adjust the length of the optical path.

4.  The appearance inspection device according to any one of claims 1 to 3, further comprising:
    a controller configured to receive an image from the imaging unit, the controller being configured to perform appearance inspection of the elongated object using only images captured with the plurality of reflector sets.

5.  The appearance inspection device according to any one of claims 1 to 4, wherein each of the plurality of reflectors reflects light on a surface of the reflector.

# FIG. 1

# FIG. 2

# FIG. 3A

# FIG. 3B

# FIG. 4A

23a  11  24a  11                    11  22a  11  21a

# FIG. 4B

23a  11  24a  11                    11  22a  11  21a

F1                                              F2

# FIG. 5

# FIG. 6A

# FIG. 6B

## INTERNATIONAL SEARCH REPORT

| International application No. |
| --- |
| **PCT/JP2023/009556** |

| A. | CLASSIFICATION OF SUBJECT MATTER |
| --- | --- |

*G01N 21/892*(2006.01)i
FI:   G01N21/892 C

According to International Patent Classification (IPC) or to both national classification and IPC

| B. | FIELDS SEARCHED |
| --- | --- |

Minimum documentation searched (classification system followed by classification symbols)

G01N21/84-G01N21/958, G01B11/00-G01B11/30, G01N23/00-G01N23/2276, G01N22/00-G01N22/04, G06T1/00-G06T1/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-056950 A (SUMITA OPTICAL GLASS, INC.) 11 April 2019 (2019-04-11) paragraphs [0019]-[0037], fig. 1-12 | 1-5 |
| A | Microfilm of the specification and drawings annexed to the request of Japanese Utility Model Application No. 152788/1990 (Laid-open No. 091961/1991) (NEC CORP.) 19 September 1991 (1991-09-19) | 1-5 |
| A | JP 2019-078665 A (MORESCO CORP.) 23 May 2019 (2019-05-23) | 1-5 |
| A | JP 2017-158370 A (HOKKAIDO ELECTRIC POWER CO., INC.) 07 September 2017 (2017-09-07) | 1-5 |
| A | JP 2017-009522 A (JFE STEEL CORP.) 12 January 2017 (2017-01-12) | 1-5 |
| A | JP 2017-009541 A (NEJILAW INC.) 12 January 2017 (2017-01-12) | 1-5 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 March 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/009556**

| Patent document cited in search report | | | Publication date (day/month/year) | Patent family member(s) | Publication date (day/month/year) |
|---|---|---|---|---|---|
| JP | 2019-056950 | A | 11 April 2019 | (Family: none) | |
| JP | 03-091961 | U1 | 19 September 1991 | (Family: none) | |
| JP | 2019-078665 | A | 23 May 2019 | (Family: none) | |
| JP | 2017-158370 | A | 07 September 2017 | (Family: none) | |
| JP | 2017-009522 | A | 12 January 2017 | (Family: none) | |
| JP | 2017-009541 | A | 12 January 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008309708 A